# EUROPEAN PATENT SPECIFICATION

(11) **EP 0 521 885 B1**
(45) Date of publication and mention of the grant of the patent: **28.06.1995**
(21) Application number: 91905225.8
(22) Date of filing: 04.03.1991
(51) Int. Cl.: E03C 1/00, F17D 5/02

(54) **APPARATUS FOR PREVENTING WATER DAMAGE DUE TO PLUMBING LEAKS IN BUILDINGS**
GERÄT ZUR VERHINDERUNG VON WASSERSCHÄDEN AUFGRUND UNDICHTER STELLEN IN WASSERLEITUNGEN IN GEBÄUDEN
APPAREIL POUR PREVENIR LES DEGATS CAUSES PAR LES FUITES D'EAU AFFECTANT LES CANALISATIONS DES BATIMENTS

(30) Priority: 19.03.1990 FI 901351; 03.05.1990 FI 902214
(43) Date of publication of application: 13.01.1993
(73) Proprietor: MALLINEN, Reijo, SF-91930 Ala-Temmes (FI)
(72) Inventor: MALLINEN, Reijo, SF-91930 Ala-Temmes (FI)
(74) Representative: DIEHL GLAESER HILTL & PARTNER
(86) International application number: FI9100061
(87) International publication number: WO9114837

(56) References cited:
- WO-A-88/05515
- DE-C- 2 916 057
- US-A- 2 952 271
- US-A- 3 096 782
- US-A- 3 831 624
- US-A- 4 410 004

## Description

The invention relates to an apparatus for preventing water damages due to leaks in plumbing in buildings, where water and/or heating lines are placed inside mounting and casing tubes and where connection boxes are used for connecting e.g. water fixtures and/or various implements to water or heating lines, whereupon at least one of the connection boxes is an inspection box and is provided with an outlet tube or a corresponding means for connecting the connection box to the drain.

Number of water damages has greatly increased since use of plastic pipes became prevalent in water and heating installations. This is due to the fact that joints of plastic pipes can come loose as a result of thermal movements. Movements of the surrounding structures can also move the pipes so much that joints are loosened.

For instance, if a joint of a 20 mm water line is loosened, the amount of discharged water is about 5-7 m³/h. The floor wells in the sanitary accommodations of the building cannot drain the water at the same pace which means that structures will be wetted and damaged.

If the leaking tube is situated somewhere inside the structures, the leak will not be observed until the leakage water has in some place penetrated through the structure. As explained later in greater detail, finding of the leakage point inside structures is very difficult. In this case, it is generally necessary to dismantle some of the structures and before the leakage has been found and repaired severe damage of the structures has normally already occurred so that they must at least partly be renewed.

It is a common practice to install those water and heating lines, which remain inside structures, inside plastic mounting and casing tubes. The casing tubes protect the water and heating pipes during casting of the surrounding structural part, e.g. the base floor. The casing tubes also make the subsequent repairing of the water lines easier.

The mounting and casing tubes continue uniformly without any joints inside the structures. The tube material is watertight and it withstands the water pressure of the water distribution system. Thermal movements do not have so much effect on the mounting and casing tubes as they do on the water and heating pipes, which expand and contract depending on the temperature of the water flowing through the tubes. The air space between the mounting and casing tubes and the water or heating line functions as an effective isolation. In most of the cases when water damages have occurred, the casing tubes have remained intact.

When the joint of two tubes is loosened, the mounting and casing tube will be quickly filled with water and water will start flowing into the structures through the open ends of the mounting and casing tubes. If the leaking point is small, e.g. caused by a nail, and there is only a slow flow of water into the structures, the water will flow to the open ends of the mounting and casing tubes resulting in rotting of the structures near the ends of the tubes. Since the leaking point can be situated far from the place where it flows into the structures, it is understandable that it can be quite difficult to locate the leaking point inside the structures.

The patent publications US 2 952 271, US 3 096 782 and US 3 718 154 present a method for installing the water and electric connections for a washing machine inside a connection box built in the wall structure and leading the possible leakage water through the outlet opening into the drain. The front panels of the boxes presented in the reference publications are open facilitating insertion of the washing machine drain hose into the box as well as access to the faucets. However, there are no protective mounting and casing tubes used in the installation of water lines so that, if the water line gets broken, water will flow into the structures.

The German patent publication 2916057 shows a connection box for joining pipes to water lines under a floor in a building. The connection box is a sort of inspection box, and it is connected to a drain for leading away water which might leak from the joints between the pipes. However, the leaks in the water lines outside the box cause water to flow into the structures under the floor.

The object of this invention is to present an apparatus by means of which it is possible, in case of leaks in the plumbing, to prevent damage of structures and to locate the leaking point quickly and accurately. The apparatus according to the invention is characterized in that for detecting leaks in the water or heating lines said connection box is watertight and provided with a connection element for a watertight connecting of at least one mounting and casing tube, in addition to which the apparatus further comprises sealing elements which are mounted onto those ends of the mounting and casing tubes which lie outside said at least one connection box connected to the drain and which are arranged to prevent leakage water from flowing out through said ends of the mounting and casing tubes, whereupon the leakage water flowing out of a broken water or heating line is constrained to move through the mounting and casing tube to said at least one connection and inspection box connected to the drain and therefrom further through an outlet tube or a corresponding means to the drain.

The invention utilizes mounting and casing tubes of the water and heating lines which either already exist in the structure or which will be installed therein. The apparatus is suitable for use in one-family houses, terraced houses and blocks of flats and the apparatus can be installed equally well in a new house as in an old house which is to be restored. Compared with prior art, the invention brings about a particular advantage in blocks of flats and in terraced houses in which the main supply lines from one apartment to another continue throughout the house whereupon a possible water damage in one apartment can easily cause damage in the structures of the neighboring apartment. It is possible to install various measuring devices necessary for the plumbing like water meters and temperature control devices in the connection and inspection box which is connected to the drain.

The invention will be explained in the following referring to the enclosed drawings in which
- figure 1: shows a vertical cross-sectional view of a connection and inspection box installed in a base floor and connected to the drain,
- figure 2: shows the connection and inspection box of figure 1 seen from above,
- figure 3: shows a connection and inspection box which is installed in a wall structure and which is connected to the drain,
- figure 4: shows a front view of the connection and inspection box of figure 3 and
- figure 5: shows a sealed box installed at that end of the mounting and casing tube which lies away from the connection and inspection box which is connected to the drain.

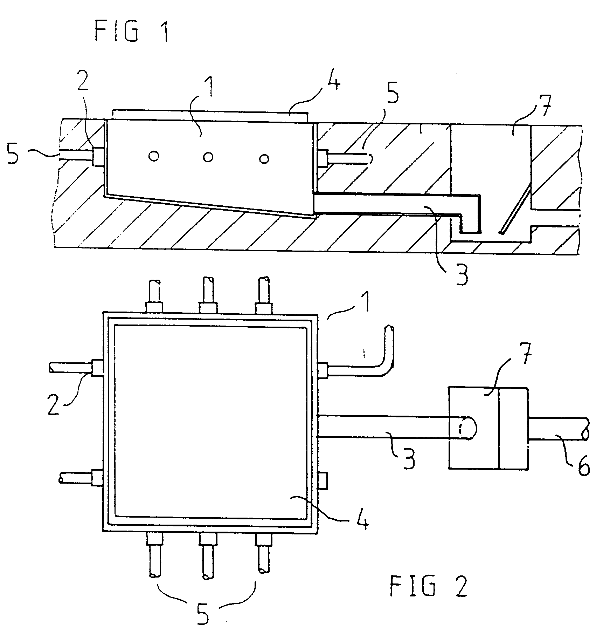

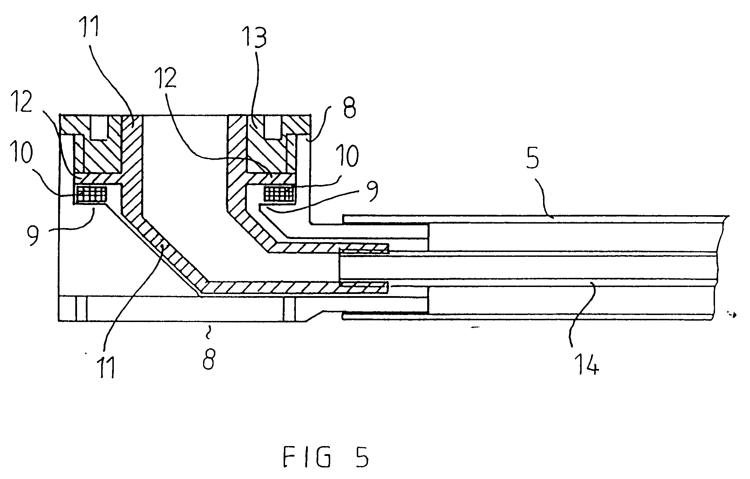

In the exemplary case, the apparatus mainly comprises a connection and inspection box 1 which is connected to the drain, later called simply as the connection and inspection box 1, to which the mounting and casing tubes 5 of the water and/or heating lines are connected, as shown in figures 1-4, and a sealed box 8 of figure 5 connected to the other end of the mounting and casing tubes 5 i.e. at that end which lies away from the connection and inspection box 1.

The connection and inspection box 1 is watertight withstanding the water-pressure and having a basin-like form with e.g. a square cross-section, about 60 cm x 60 cm and a height of 20 cm. The box can be made of metal or e.g. glass fiber reinforced synthetic material like plastic. The connection and inspection 1 includes a cover 4 which is watertight and water pressure-tight and which is preferably at least partly transparent.

The connection and inspection box 1 is provided with connection elements 2 for connecting the mounting and casing tubes 5. For each tube there is provided its own connection element 2. The connection element 2 can be a collar-like part protruding from the box onto which part the mounting and casing tube is attached by an adhesive binding or the connection elements 2 can be provided with e.g. threaded sleeves for attaching the mounting and casing tubes 5 in such a manner that they can be detached.

The connection and inspection box 1 is also provided with an outlet tube 3 for connecting the box to the drain 6. In the exemplary case, the apparatus also includes a floor draining well 7 which is placed so that the leakage water flowing from the connection and inspection box 1 through the outlet tube 3 first flows into the floor draining well 7 and from there further to the drain 6.

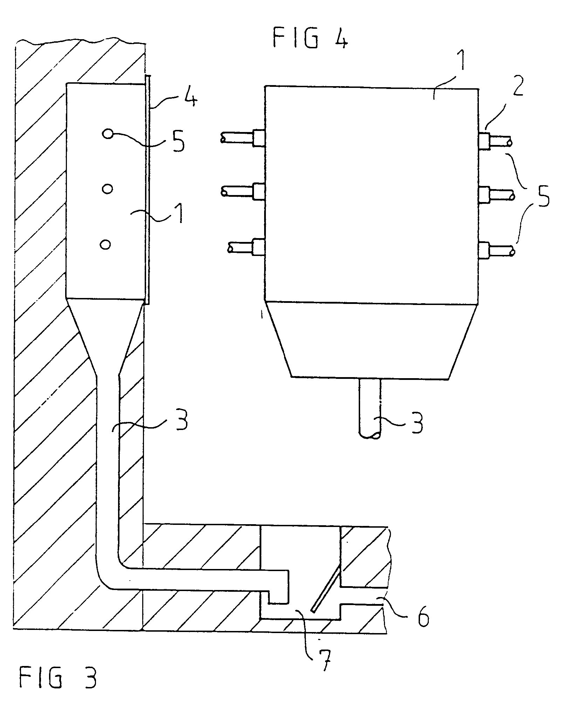

The connection and inspection box 1 is installed e.g. inside the base floor structure or inside the wall structure as a concealed installation as shown in figures 1 and 3. The apparatus can also be attached as a surface installation e.g. hanging the box on the wall.

In the exemplary case, the mounting and casing tubes 5 are closed at their other ends, which are away from the connection and inspection box 1, by means of sealed boxes 8 shown in figure 5. Sealed boxes 8 are used at those points of the structure where the water or heating line 14 exits the mounting and casing tube 5, e.g. near a water fixture. Thus the sealed box 8 simultaneously functions also as a connection box.

Inside the sealed box 8, there is provided a connection piece 11 for joining the water line 14 and the water fixture. The inner surface of the sealed box 8 contains a circumferential shoulder 9 supporting a washer 10. The connection piece 11 contains a flange 12 which is arranged to fit against the shoulder 9 when the sealed box 8 is assembled. As the water fixture is assembled, the washer 10 between the shoulder 9 and the flange 12 is pressed against said parts closing the sealed box 8 with a joint which is watertight and holds the pressure of the water lines. The compression of the washer 10 between said parts is obtained by means of a threaded mounting ring 13 which is screwed on to the sealed box. Sealing of the mounting and casing tube 5 can also be accomplished using other kinds of sealing devices.
In the method according to the invention, the mounting and casing tubes 5 of the water and heating pipes are watertightly connected to the connection and inspection box 1 and sealing of the ends the mounting and casing tubes 5 is accomplished e.g. so that the first end of the tube is attached to the sleeve of the connection part 2 of the connection and inspection box 1 and the second end which is away from the connection and inspection box 1 is watertightly connected to said sealed box 8.

The connection and inspection box 1 is provided with a connection to the drain 6 preferably via a floor draining well 7. The connection and inspection box 1 is closed by means of a watertight cover 4.

In case of water damage, the leakage water flowing from the broken water or heating line moves through the mounting and casing tube 5 into the connection and inspection box 1 and therefrom further through the outlet tube 3 and possibly via the floor draining well 7 to the drain 6. Because both the connection and inspection box 1 and the mounting and casing tubes 5 are quickly filled with water the apparatus must withstand the pressure of the water distribution system.

From the flowing of the leakage water into the connection and inspection box 1 it is easy to deduce which one of the water or heating pipes is broken. The leaking point is readily found so that actual repairing can be commenced immediately. It is also possible to provide the connection and inspection box 1 with an alarm which automatically gives an alarm e.g. according to the flow or surface level of the leakage water.

Depending on the size of the distribution system of the building, the apparatus may have one or more connection and inspection boxes 1. In a building containing several apartments, it is feasible to have at least one connection and inspection box 1 for each apartment. In blocks of flats it is feasible to have one connection and inspection box 1 for each floor and one for each apartment.

The invention is not limited to the presented embodiments but it can be varied within the limits set forth in the enclosed claims. E.g. by changing the dimensions of the connection and inspection box 1 it is possible to manufacture an apparatus of a suitable capacity for any other application.

## Claims

1. Apparatus for preventing water damages due to leaks in plumbing in buildings, where water and/or heating lines are placed inside mounting and casing tubes (5) and where connection boxes (1,8) are used for connecting e.g. water fixtures and/or various implements to water or heating lines, whereupon at least one of the connection boxes (1) is an inspection box and is provided with an outlet tube (3) or a corresponding means for connecting the connection box (1) to the drain (6), **characterized** in that for detecting leaks in the water or heating lines said connection box (1) is watertight and provided with a connection element (2) for a watertight connecting of at least one mounting and casing tube (5), in addition to which the apparatus further comprises sealing elements which are mounted onto those ends of the mounting and casing tubes (5) which lie outside said at least one connection box (1) connected to the drain and which are arranged to prevent leakage water from flowing out through said ends of the mounting and casing tubes (5), whereupon the leakage water flowing out of a broken water or heating line is constrained to move through the mounting and casing tube (5) to said at least one connection and inspection box (1) connected to the drain and therefrom further through an outlet tube (3) or a corresponding means to the drain (6).

2. Apparatus according to claim 1, **characterized** in that the apparatus comprises sealed boxes (8) functioning as connection boxes and being mounted watertightly on said ends of the mounting and casing tubes (5), the sealed boxes (8) functioning as said sealing elements and being watertightly closed to prevent leakage water from flowing out through said ends of the mounting and casing tubes (5).

3. Apparatus according to claim 1, **characterized** in that the connection element (2) comprises a connection sleeve into which the mounting and casing tube (5) is detachably attached.

4. Apparatus according to claim 1, **characterized** in that said at least one connection and inspection box (1) connected to the drain is provided with a watertight cover (4) which is preferably at least partly transparent.

5. Apparatus according to claim 1, **characterized** in that the connection and inspection boxes (1,8) are made of metal or plastics or e.g. a glass fiber reinforced synthetic material.

6. Apparatus according to claim 1, **characterized** in that the apparatus additionally comprises a floor draining well (7), into which the leakage water possibly moving from said at least one connection and inspection box (1) connected to the drain through the outlet tube (3) or a corresponding means is conducted and which floor draining well (7) is connected to the drain (6).

## Patentansprüche

1. Vorrichtung zum Verhindern von Wasserschäden aufgrund undichter Stellen im Wasserleitungssystem eines Gebäudes, bei der Wasser- und/oder Heizungsleitungen in Installations- und Ummantelungsrohren (5) angeordnet sind und Anschlußkästen (1, 8) zum Anschließen von beispielsweise Wasserarmaturen und/oder verschiedenen Geräten an Wasser- oder Heizungsleitungen verwendet werden, wobei mindestens einer der Anschlußkästen (1) ein Kontrollkasten ist und mit einem Ablaßrohr (3) oder einem entsprechenden Mittel zum Verbinden des Anschlußkastens (1) mit dem Abfluß (6) versehen ist, dadurch gekennzeichnet, daß zum Erfassen von undichten Stellen in den Wasser- oder Heizungsrohren der Anschlußkasten (1) wasserdicht und mit einem Verbindungselement (2) für einen wasserdichten Anschluß mindestens eines Installations- und Ummantelungsrohrs (5) ausgerüstet ist, und daß die Vorrichtung desweiteren Abdichtungselemente aufweist, die auf denjenigen Enden der Installations- und Ummantelungsrohre (5) angebracht sind, die außerhalb des mindestens einen, mit dem Abfluß verbundenen Anschlußkastens (1) liegen, und die so angeordnet sind, daß sie ein Ausströmen des aus einer undichten Stelle auslaufenden Wassers durch diese Enden der Installations- und Ummantelungsrohre (5) verhindern, wobei das aus einem gebrochenen Wasser- oder Heizungsrohr auslaufende Wasser zwangsläufig durch das Installations- und Ummantelungsrohr (5) zu dem mindestens einen, mit dem Abfluß verbundenen Anschluß- und Kontrollkasten (1) und von dort weiter durch ein Ablaßrohr (3) oder ein entsprechendes Mittel zu dem Abfluß (6) fließt.

2. Vorrichtung nach Anspruch 1, dadurch gekennzeichnet, daß sie abgedichtete Kästen (8) aufweist, die als Anschlußkästen dienen und wasserdicht an den Enden der Installations- und Ummantelungsrohre (5) angebracht sind, wobei die abgedichteten Kästen (8) als Dichtungselemente dienen und wasserdicht verschlossen sind, um ein Ausströmen des aus undichten Stellen auslaufenden Wassers durch diese Enden der Installations- und Ummantelungsrohre (5) zu verhindern.

3. Vorrichtung nach Anspruch 1, dadurch gekennzeichnet, daß das Verbindungselement (2) einen Verbindungsstutzen aufweist, in dem das Installations- und Ummantelungsrohr (5) lösbar befestigt ist.

4. Vorrichtung nach Anspruch 1, dadurch gekennzeichnet, daß mindestens ein mit dem Abfluß verbundener Anschluß- und Kontrollkasten (1) mit einer wasserdichten Abdeckung (4) versehen ist, die vorzugsweise zumindest teilweise durchsichtig ist.

5. Vorrichtung nach Anspruch 1, dadurch gekennzeichnet, daß die Anschluß- und Kontrollkästen (1, 8) aus Metall, Kunststoff oder einem glasfaserverstärkten synthetischen Material hergestellt sind.

6. Vorrichtung nach Anspruch 1, dadurch gekennzeichnet, daß sie ferner einen Bodenablaufschacht (7) aufweist, in den das aus einer undichten Stelle ausströmende Wasser, das von dem mindestens einen, mit dem Abfluß verbundenen Anschluß- und Kontrollkasten (1) durch das Ablaßrohr (3) oder ein entsprechendes Mittel fließt, eingeleitet wird, und der mit dem Abfluß (6) verbunden ist.

## Revendications

1. Appareil pour prévenir les dégâts des eaux dûs aux fuites dans les canalisations des bâtiments, dans lequel des conduites d'eau et/ou de chauffage sont placées à l'intérieur de tuyaux d'assemblage et de tubage (5) et dans lequel des boîtes de connexion (1,8) sont utilisées pour relier par exemple des appareils hydrauliques et/ou différents instruments aux conduites d'eau ou de chauffage, grâce à quoi l'une au moins des boîtes de connexion (1) est une boîte de visite pourvue d'un tuyau de sortie (3) ou de moyens correspondants pour relier la boîte de connexion (1) à un tuyau d'écoulement (6), caractérisé en ce que, afin de détecter des fuites dans les conduites d'eau ou de chauffage, ladite boîte de connexion (1) est étanche et pourvue d'un élément de connexion (2) pour la connexion étanche d'au moins un tuyau d'assemblage et de tubage (5), l'appareil comprenant en outre des éléments d'étanchéité qui sont montés sur ces extrémités des tuyaux d'assemblage et de tubage (5), situés à l'extérieur de ladite au moins une boîte de connexion (1), qui est reliée au tuyau d'écoulement, et qui sont disposés de façon à éviter que l'eau provenant de la fuite s'écoule vers l'extérieur, à travers lesdites extrémités des tuyaux d'assemblage et de tubage (5), grâce à quoi l'eau provenant de la fuite, qui s'écoule à l'extérieur d'une conduite d'eau ou de chauffage détériorée, est contrainte de traverser le tuyau d'assemblage et de tubage (5) vers ladite au moins une boîte de connexion et de visite (1), reliée au tuyau d'écoulement, et, à partir de là, de traverser encore un tuyau de sortie (3) ou un moyen correspondant, vers le tuyau d'écoulement (6).

2. Appareil selon la revendication 1, caractérisé en ce que l'appareil comprend des boîtes fermées hermétiquement (8) fonctionnant comme des boîtes de connexion et étant montées de façon étanche sur lesdites extrémités des tuyaux d'assemblage et de tubage (5), les boîtes fermées hermétiquement (8) remplissant la fonction desdits éléments d'étanchéité et étant fermées de façon étanche, afin d'éviter que l'eau provenant de la fuite s'écoule vers l'extérieur à travers lesdites extrémités des tuyaux d'assemblage et de tubage (5).

3. Appareil selon la revendication 1, caractérisé en ce que l'élément de connexion (2) comprend une gaine de connexion dans laquelle le tuyau d'assemblage et de tubage (5) est fixé de façon amovible.

4. Appareil selon la revendication 1, caractérisé en ce que ladite au moins une boîte de connexion et de visite (1) reliée au tuyau d'écoulement est pourvue d'un couvercle étanche (4) qui est de préférence au moins partiellement transparent.

5. Appareil selon la revendication 1, caractérisé en ce que les boîtes de connexion et de visite (1,8) sont en métal, en plastique ou, par exemple, en un matériau synthétique renforcé par des fibres de verre.

6. Appareil selon la revendication 1, caractérisé en ce l'appareil comprend en outre un puits d'égouttage (7) dans lequel se dirige l'eau provenant de la fuite, qui est susceptible de s'écouler depuis ladite au moins une boîte de connexion et de visite (1), reliée audit tuyau d'écoulement, à travers le tuyau de sortie (3) ou un moyen correspondant, le puits d'égouttage (7) étant relié au tuyau d'écoulement (6).
